# EUROPÄISCHE PATENTSCHRIFT

(11) **EP 1 670 632 B1**
(45) Veröffentlichungstag und Bekanntmachung des Hinweises auf die Patenterteilung: **05.05.2010**
(21) Anmeldenummer: 04789958.8
(22) Anmeldetag: 11.10.2004
(51) Int. Cl.: B29C 65/06, B23K 20/10, B23K 20/12

(54) **VERFAHREN UND ANORDNUNG ZUM REIBUNGSSCHWEISSEN**
METHOD AND ARRANGEMENT FOR FRICTION WELDING
PROCEDE ET DISPOSITIF DE SOUDAGE PAR FICTION

(30) Priorität: 11.10.2003 DE 10347345
(43) Veröffentlichungstag der Anmeldung: 21.06.2006
(73) Patentinhaber: KLN ULTRASCHALL GMBH, D-64646 Heppenheim (DE)
(72) Erfinder: MICHEL, Werner, 64291 Darmstadt (DE); ECKERT, Siegfried, 64668 Rimbach (DE); WAGNER, Reinhard, 64646 Heppenheim (DE)
(74) Vertreter: Katscher Habermann Patentanwälte
(86) Internationale Anmeldenummer: PCT/DE2004/002252
(87) Internationale Veröffentlichungsnummer: WO 2005/035227

(56) Entgegenhaltungen:
- EP-A- 0 481 125
- WO-A-02/076737
- US-A1- 2002 017 883

## Beschreibung

Die Erfindung betrifft ein Verfahren und eine Anordnung zum Reibungsschweißen, bei welchen eines der zu verbindenden Teile mit Hilfe eines elektromagnetischen Schwingers in Schwingung versetzt wird und gesteuert von einem Wegsensor ein Anschwingen durch abwechselnde Magnetisierung zweier entgegengesetzt wirkender Elektromagnete erfolgt.

Ein solches Verfahren und eine solche Anordnung sind aus der US 2002/0 017 883 bekannt.

Beim Verbinden von Teilen durch Reibungsschweißen wird Wärme dadurch erzeugt, dass die zu verbindenden Teile gegeneinander bei gleichzeitigem Gegeneinanderpressen gerieben werden. Dies hat den Vorteil, dass die Wärme unmittelbar an den miteinander zu verbindenden Flächen entsteht und nicht erst durch die Teile hindurch zur Schweißstelle transportiert werden muss. Zum Erzeugen der Reibungswärme dient ein elektromagnetischer Schwinger, der mit einer Aufnahme für das eine zu verbindende Teil versehen ist, während das andere Teil von einem Hubtisch herangeführt und angepresst wird.

Zum Antrieb des Schwingers wird von einem Generator ein Wechselstrom erzeugt, dessen Frequenz der halben Resonanzfrequenz des Schwingers entspricht. Da diese auch von der Werkstückaufnahme am Schwinger abhängt, ist bei bekannten Vorrichtungen nach einem Wechsel der Werkstückaufnahme ein Abgleich der Frequenz erforderlich. Dazu ist bei einer aus EP 0 481 825 A2 bekannten Vorrichtung vorgesehen, dass von einem Mikroprozessor die Arbeitsfrequenz des Generators solange verändert wird, bis die Stromstärke bei einer vorgegebenen Schwingungsamplitude minimal ist. Dabei vergeht jedoch Zeit, in welcher die Vorrichtung nicht optimal arbeitet. Um dieses zu verbessern, ist bei der bekannten Vorrichtung weiterhin vorgesehen, dass die frequenzabhängige Stromkurve für ein bestimmtes Werkzeug ermittelt und als Referenz gespeichert wird. Damit wird jedoch insgesamt noch nicht eine möglichst kurze Schwingzeit erreicht.

Durch WO 02/076737 A1 ist eine weitere Anordnung zum Reibungsschweißen bekannt geworden, bei welcher ein Schwinger vorgesehen ist, mit dem eines der zu verbindenden Teile in Schwingung versetzt wird und der von entgegengesetzt wirkenden Elektromagneten angetrieben wird, wobei ein Ausgang eines die jeweilige Position des Schwingers aufnehmenden Wegsensors mit einem Eingang eines Reglers verbunden ist, der ausgangsseitig an Eingänge einer analogen Leistungsendstufe für die Elektromagnete angeschlossen ist. Hierbei werden für jeweils eine Halbwelle der Schwingung die Elektromagnete mit Spannung beaufschlagt. Eine zur Erregung der Schwingung geeignete Phasenlage der Magnetisierung soll dabei durch eine durch die Induktivität der Elektromagnete bedingte Phasenverschiebung erzielt werden. Dies führt zu einem ineffizienten Regelverhalten der Anordnung.

Das erfindungsgemäße Verfahren ermöglicht eine kurze Schweißprozesszeit dadurch, dass nach einem geregelten Anschwingen und einer vorgebbaren Schwingzeit der Schwinger elektrisch abgebremst wird, dass in Abhängigkeit von der jeweiligen Bewegungsrichtung des Schwingers beim Anschwingen ein die Bewegung unterstützender Elektromagnet und beim Abbremsen ein die jeweilige Bewegung hemmender Elektromagnet mit Strom beaufschlagt wird und dass während des Abbremsens bei Erreichen einer vorgegebenen Schwingungsamplitude der Strom abgeschaltet wird.

Das erfindungsgemäße Verfahren beruht auf der Erkenntnis, dass die Vibration möglichst unmittelbar nach dem Fügevorgang beendet wird, damit eine Beeinträchtigung der bereits erfolgten Verbindung vermieden wird. Außerdem wird durch das geregelte Anschwingen sichergestellt, dass sich die Resonanzfrequenz unmittelbar vollautomatisch einstellt.

Das Abschalten des Stroms bei Erreichen einer vorgegebenen Schwingungsamplitude verhindert ein Wiederansahwingen mit entgegengesetzter Phasenlage. Dabei wird die vorgegebene Schwingungsamplitude derart gewählt, dass während des nunmehr lediglich durch die mechanische Dämpfung bestimmten Ausschwingens die Fügestelle nicht überlastet wird.

Je nach Voraussetzungen im Einzelnen kann der eingeschwungene Zustand für eine jeweils zu bestimmende Zeit aufrechterhalten werden. Besonders gute Ergebnisse haben sich bei dem erfindungsgemäßen Verfahren dann gezeigt, wenn das Anschwingen und das Abbremsen jeweils kürzer als 80 ms sind.

Bei einer erfindungsgemäßen Anordnung zum Reibungsschweißen ist vorgesehen, dass der Regler so ausgebildet ist, dass er die Leistungsendstufe derart ansteuert, dass in Abhängigkeit von der jeweiligen Bewegungsrichtung des Schwingers ein die Bewegung unterstützender Elektromagnet mit Strom beaufschlagt wird, dass zum Abbremsen ein die jeweilige Bewegung hemmender Elektromagnet mit Strom beaufschlagt und dass während des Abbremsens bei Erreichen einer vorgegebenen Schwingungsamplitude der Strom abgeschaltet wird.

Diese Anordnung ermöglicht in besonders einfacher Weise ein geregeltes Anschwingen, ohne dass ein Generator vorhanden ist, der erst auf einer eventuell falschen Frequenz anschwingt und danach synchronisiert werden muss.

Bei der erfindungsgemäßen Anordnung kann der Übergang vom Anschwingen bzw. vom eingeschwungenen Zustand zum Abbremsen in einfacher Weise durch Umschalten der Leistungsendstufe bewirkt werden.

Eine vorteilhafte Ausgestaltung der erfindungsgemäßen Anordnung besteht darin, dass die Leistungsendstufe von einem ersten Brückenzweig aus zwei in Reihe geschalteten Halbleiterschaltern mit parallel geschalteten Freilaufdioden und zwei weiteren Brückenzweigen aus je einer Reihenschaltung eines Halbleiterschalters und einer Diode gebildet ist, dass die Spulen der Elektromagnete zwischen den Verbindungspunkt der Halbleiterschalter des ersten Brückenzweiges einerseits und jeweils einen Verbindungspunkt der weiteren Brückenzweigen andererseits geschaltet sind, dass die Halbleiterschalter des ersten Brückenzweiges mit der Schwingfrequenz und die Halbleiterschalter der weiteren Brückenzweige mit einer höheren als die Schwingfrequenz pulsbreitenmoduliert oder toleranzbandgeregelt angesteuert werden, wobei sich je nach Regelzustand höhere Frequenzen als die Schwingfrequenz ergeben können.

Wegen bei jedem Schaltvorgang in Halbleiterschaltungen auftretender Verluste und zur Vermeidung elektromagnetischer Störungen ist man bestrebt, die Schaltfrequenzen möglichst gering zu wählen. Das ist mit dieser Ausgestaltung in vorteilhafter Weise möglich. Einige Halbleiterschalter werden mit der Schwingfrequenz, beispielsweise 270 Hz, geschaltet, andere Halbleiterschalter werden mehrmals pro Schwingung geschaltet, wobei deren Schaltfrequenz im Bereich weniger kHz bleibt. Als Abtastfrequenz für die Erfassung der Istwerte von Strom und Lage ist eine weitere Frequenz von höchstens 15 kHz erforderlich.

Auch wenn bei dieser vorteilhaften Ausgestaltung nicht alle Brückenzweige vollständig mit Halbleiterschaltern ausgestaltet werden müssen, kann es wegen der günstig auf dem Markt zur Verfügung stehenden Baugruppen vorteilhaft sein, wenn die Dioden von Halbleiterschaltern mit parallel geschalteten Freilaufdioden gebildet sind.

Durch das häufigere Schalten werden die Halbleiterschalter in den weiteren Brückenzweigen höher als diejenigen im ersten Brückenzweig belastet. Zur Verringerung dieser Belastung kann vorgesehen sein, dass von Arbeitszyklus zu Arbeitszyklus der Strom durch die Elektromagnete über die weiteren Brückenzweige vertauscht wird.

Eine andere vorteilhafte Ausgestaltung der erfindungsgemäßen Anordnung besteht darin, dass Mittel zur Bildung eines Triggersignals zum Schalten des Stroms durch den jeweiligen Elektromagneten derart ausgebildet sind, dass das Triggersignal einen vorbestimmbaren Teil, vorzugsweise einem Viertel, einer Schwingungsdauer nach einem Nulldurchgang der Schwingung auftritt.

Im Sinne eines möglichst schnellen Anschwingens kann die erfindungsgemäße Anordnung derart ausgestaltet sein, dass der Regler einen Integralanteil aufweist, der zu Beginn mit einem wesentlichen Wert vorbesetzt ist.

Eine weitere Ausgestaltung der erfindungsgemäßen Anordnung besteht darin, dass der Schwinger einschließlich dessen federnder Lagerung und der Werkstückaufnahme, der Wegsensor, der Regler, die Leistungsendstufe und die Elektromagnete einen Schwingkreis bilden, dessen Resonanzfrequenz im Wesentlichen von der Eigenfrequenz des Schwingers einschließlich dessen federnder Lagerung und der Werkstückaufnahme bestimmt ist. Dies trägt ebenfalls zu einem schnellen Anschwingen,bei.

Ausführungsbeispiele der Erfindung sind in der Zeichnung anhand mehrerer Figuren dargestellt und in der nachfolgenden Beschreibung näher erläutert. Es zeigt:
Fig. 1 eine schematische Darstellung eines Ausführungsbeispiels,
Fig. 2 eine bei der erfindungsgemäßen Anordnung besonders vorteilhaft verwendbare Leistungsendstufe,
Fig. 3 Zeitdiagramme zur Erläuterung des Schwingvorgangs und
Fig. 4 eine Darstellung der Leitend-Phasen der Halbleiterschalter der Leistungsendstufe.

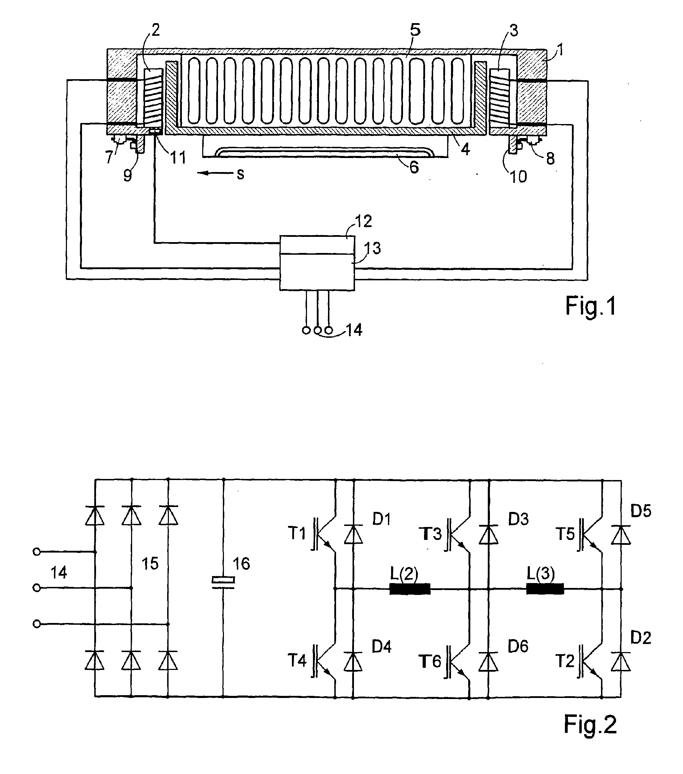

Fig. 1 zeigt die zur Erläuterung der Erfindung notwendigen Teile einer Reibungsschweiß-Vorrichtung. Auf einer Kopfbrücke 1 sind zwei Elektromagnete 2, 3 angeordnet, die einen Schwingrahmen 4 entsprechend der Bestromung jeweils in ihre Richtung ziehen - im Falle des Elektromagneten 2 in Richtung des Pfeils s. Der Schwingrahmen 4 ist an der Kopfbrücke 1 mit Hilfe einer Feder 5 schwingfähig gelagert. Der Schwingrahmen trägt eine Werkstückaufnahme 6, die je nach zu verbindendem Teil ausgeführt ist und entsprechend ausgewechselt werden kann. Der Schwingrahmen 4, die Feder 5 und die Werkstückaufnahme 6 werden im folgenden auch kurz Schwinger genannt.

Mit Hilfe von Winkeln 7, 8 ist die Kopfbrücke auf Träger 9, 10 montiert, die Teil einer Maschine sind, die unter anderem in nicht dargestellter Weise eine Aufnahme für das andere zu verbindende Teil trägt, die für den Schweißvorgang an die Werkstückaufnahme 6 angepresst wird. Ein Wegaufnehmer 11 misst die jeweilige Position des Schwingrahmens und leitet sie als entsprechendes elektrisches Signal an einen Regler 12 weiter. Ausgangssignale des Reglers 12 werden einer Leistungsendstufe 13 zugeführt, welche bei 14 dreiphasig an das Stromnetz angeschlossen ist.

Ein Beispiel für die Leistungsendstufe 13 ist in Fig. 2 detaillierter dargestellt. Die bei 14 zugeführte Netzspannung wird von einem Dreiphasen-Gleichrichter 15 gleichgerichtet. Ein Kondensator 16 dient zur-Glättung der Gleichspannung sowie zum Puffern der pulsierenden Belastung. Die in Fig. 2 dargestellte Anordnung wird in großen Stückzahlen als Dreiphasen-Umrichter hergestellt. Ein darin enthaltener in Fig. 2 nicht gezeigter Prozessor braucht zur Realisierung der Erfindung nur in geeigneter Weise programmiert zu werden.

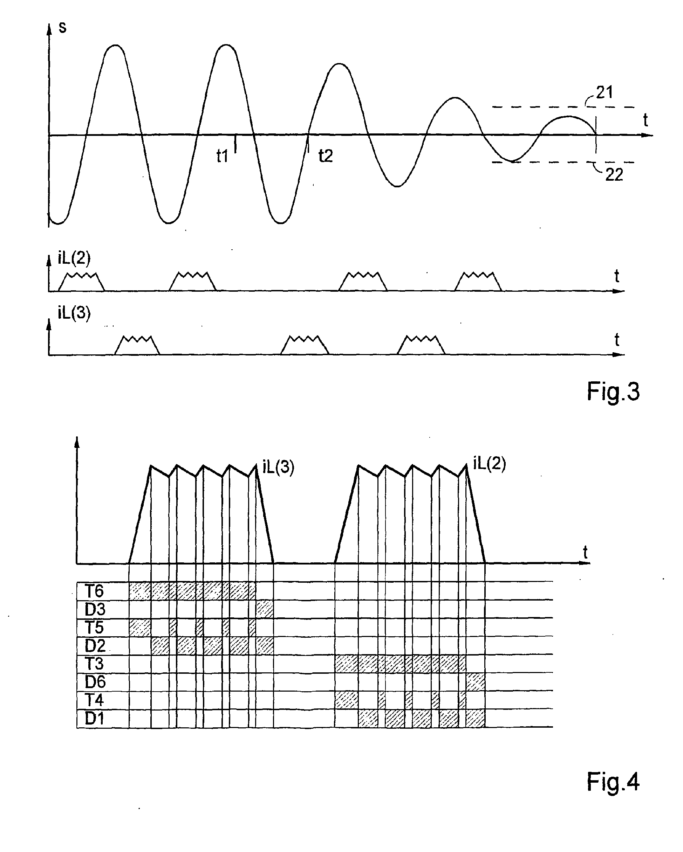

Die Leistungsendstufe wird von jeweils zwei in Reihe geschalteten Leistungstransistoren T1, T4, T3, T6; T5, T2 gebildet, denen jeweils eine Freilaufdiode D1, D4; D3, D6; D5, D2 parallel geschaltet ist. Der mittlere Brückenzweig T3, T6 wird jeweils in Abhängigkeit von der Bewegungsrichtung des Schwingers mit der Schwingfrequenz gesteuert. Zur Regelung der Schwingungsamplitude wird jeweils einer der Transistoren T5 oder T4 mit einer höheren Frequenz pulsbreitenmoduliert oder gemäß einer Toleranzbandregelung des Stroms angesteuert. Die Dioden D3 bzw. D6 des mittleren Brückenzweiges sowie die Dioden D2 und D1 dienen dabei als Freilaufdioden. Einzelheiten zu den Leitend-Phasen der Halbleiterschalter werden später im Zusammenhang mit Fig. 4 erläutert.

Zunächst wird jedoch das erfindungsgemäße Verfahren anhand von Fig. 3 vorgestellt. Das Diagramm a zeigt den zeitlichen Verlauf des Weges s des Schwingers, die Diagramme d und c den Verlauf der Ströme iL(2) und iL(3) der beiden Elektromagnete 2, 3 (Fig. 1). Während der ersten drei Halbwellen werden die Elektromagnete derart bestromt, dass die Schwingung unterstützt wird. Während der dritten Halbwelle, beispielsweise zum Zeitpunkt t1, erfolgt ein Befehl zum Bremsen, worauf in der folgenden Halbwelle eine Wartepause dadurch gebildet wird, dass keiner der Elektromagnete bestromt wird. In den folgenden Halbwellen, beginnend mit dem Zeitpunkt t2, wird dann jeweils der Elektromagnet bestromt, der die Schwingung bremst, so dass deren Amplitude abnimmt. Sobald die Amplitude einen vorgegebenen Wert 21, 22 unterschreitet, wird der Strom abgeschaltet, um eine gegenphasige Wieder-Anregung zu vermeiden.

Fig. 4 stellt ein Zeitdiagramm des Stromes i dar, sowie als schraffierte Flächen die jeweiligen Leitend-Phasen der Halbleiterschalter. Zur Bestromung des Elektromagneten 2 ist der Halbleiterschalter T6 während der entsprechenden Halbwelle der Bewegungsphase größtenteils leitend. Während dieser Zeit wird der Halbleiterschalter T5 getaktet, wobei das Tastverhältnis entsprechend der vorgegebenen Schwingungsamplitude geregelt wird. Jeweils nach dem Abschalten des Halbleiterschalters T5 fließt der Strom durch die in dem Elektromagneten gespeicherte Energie im Freilauf über die Diode D2 und den Halbleiterschalter T6. Nach Abschalten der Halbleiterschalter T5 und T6 fließt der Strom über die Dioden D2 und D3 zurück in den Kondensator und klingt wegen dessen Spannung sehr schnell ab.

In der folgenden Halbwelle wird der Elektromagnet 3 bestromt. Die Leitend-Phasen der Halbleiterschalter T3 und T4 sowie der Dioden D6 und D1 entsprechen den Leitend-Phasen der Halbleiterschalter T6 und T5 sowie der Dioden D3 und D2 in der vorangegangenen Halbwelle.

## Patentansprüche

1. Verfahren zum Reibungsschweißen, bei welchem eines der zu verbindenden Teile mit Hilfe eines elektromagnetischen Schwingers (4, 5, 6) in Schwingung versetzt wird und gesteuert von einem Wegsensor (11) ein Anschwingen durch abwechselnde Magnetisierung zweier entgegengesetzt wirkender Elektromagnete (2, 3) erfolgt, **dadurch gekennzeichnet, dass** nach einem geregelten Anschwingen und einer vorgebbaren Schwingzeit der Schwinger (4, 5, 6) elektrisch abgebremst wird, dass in Abhängigkeit von der jeweiligen Bewegungsrichtung des Schwingers (4, 5, 6) beim Anschwingen ein die Bewegung unterstützender Elektromagnet (2, 3) und beim Abbremsen ein die jeweilige Bewegung hemmender Elektromagnet (2, 3) mit Strom beaufschlagt wird und dass während des Abbremsens bei Erreichen einer vorgegebenen Schwingungsamplitude der Strom abgeschaltet wird.

2. Verfahren nach Anspruch 1, **dadurch gekennzeichnet, dass** das Anschwingen und das Abbremsen jeweils kürzer als 80 ms sind.

3. Anordnung zum Reibungsschweißen, bei welcher ein Schwinger (4, 5, 6) vorgesehen ist, mit dem eines der zu verbindenden Teile in Schwingung versetzt wird und der von entgegengesetzt wirkenden Elektromagneten (2, 3) angetrieben wird, wobei ein Ausgang eines die jeweilige Position des Schwingers (4, 5, 6) aufnehmenden Wegsensors (11) mit einem Eingang eines Reglers (12) verbunden ist, der ausgangsseitig an Eingänge einer Leistungsendstufe (13) für die Elektromagnete (2, 3) angeschlossen ist, **dadurch gekennzeichnet,**
**dass** der Regler (12) so ausgebildet ist, dass er die Leistungsendstufe (13) derart ansteuert, dass in Abhängigkeit von der jeweiligen Bewegungsrichtung des Schwingers (4, 5, 6) ein die Bewegung unterstützender Elektromagnet (2, 3) mit Strom beaufschlagt wird, dass zum Abbremsen ein die jeweilige Bewegung hemmender Elektromagnet (2, 3) mit Strom beaufschlagt und dass während des Abbremsens bei Erreichen einer vorgegebenen Schwingungsamplitude der Strom abgeschaltet wird.

4. Anordnung nach Anspruch 3, **dadurch gekennzeichnet, dass** die Leistungsendstufe (13) von einem ersten Brückenzweig aus zwei in Reihe geschalteten Halbleiterschaltern (T3, T6) mit parallel geschalteten Freilaufdioden (D3, D6) und zwei weiteren Brückenzweigen aus je einer Reihenschaltung eines Halbleiterschalters (T1, T2) und einer Diode (D4, D5) gebildet ist, dass die Spulen der Elektromagnete (2, 3) zwischen den Verbindungspunkt der Halbleiterschalter (T3, T6) des ersten Brückenzweiges einerseits und jeweils einen Verbindungspunkt der weiteren Brückenzweigen andererseits geschaltet sind, dass die Halbleiterschalter (T3, T6) des ersten Brückenzweiges mit der Schwingfrequenz und die Halbleiterschalter (T1, T2) der weiteren Brückenzweige pulsbreitenmoduliert oder toleranzbandgeregelt angesteuert werden, wobei sich je nach Regelzustand höhere Frequenzen als die Schwingfrequenz ergeben können.

5. Anordnung nach Anspruch 4, **dadurch gekennzeichnet, dass** die Dioden (D4, D5) von Halbleiterschaltern (T4, T5) mit parallel geschalteten Freilaufdioden (D4, D5) gebildet sind.

6. Anordnung nach Anspruch 5, **dadurch gekennzeichnet, dass** von Arbeitszyklus zu Arbeitszyklus der Strom durch die Elektromagnete (2, 3) über die weiteren Brückenzweige vertauscht wird.

7. Anordnung nach einem der Ansprüche 3 bis 6, **dadurch gekennzeichnet, dass** Mittel zur Bildung eines Triggersignals zum Schalten des Stroms durch den jeweiligen Elektromagneten (2, 3) derart ausgebildet sind, dass das Triggersignal einen vorbestimmbaren Teil, vorzugsweise einem Viertel, einer Schwingungsdauer nach einem Nulldurchgang der Schwingung auftritt.

8. Anordnung nach einem der Ansprüche 3 bis 7, **dadurch gekennzeichnet, dass** der Regler (12) einen Integralanteil aufweist, der zu Beginn mit einem wesentlichen Wert vorbesetzt ist.

9. Anordnung nach einem der Ansprüche 3 bis 8, **dadurch gekennzeichnet, dass** der Schwinger (4, 5, 6) einschließlich dessen federnder Lagerung (5) und der Werkstückaufnahme (6), der Wegsensor (11), der Regler (12), die Leistungsendstufe (13) und die Elektromagnete (2, 3) einen Schwingkreis bilden, dessen Resonanzfrequenz im Wesentlichen von der Eigenfrequenz des Schwingers (4, 5, 6) einschließlich dessen federnder Lagerung (5) und der Werkstückaufnahme (6) bestimmt ist.

## Claims

1. Method for friction welding in which one of the parts to be joined is set in oscillation with the aid of an electromagnetic oscillator (4, 5, 6) and initial oscillation takes place by alternating magnetization of two oppositely acting electromagnets (2, 3) under the control of a displacement sensor (11), **characterized in that**, after a controlled initial oscillation and a predeterminable oscillating time, the oscillator (4, 5, 6) is electrically braked, **in that**, depending on the respective direction of movement of the oscillator (4, 5, 6), during initial oscillation current is applied to an electromagnet (2, 3) assisting the movement and during braking current is applied to an electromagnet (2, 3) inhibiting the respective movement, and **in that** during the braking the current is switched off when a predetermined oscillation amplitude is reached.

2. Method according to Claim 1, **characterized in that** the initial oscillation and the braking are each shorter than 80 ms.

3. Arrangement for friction welding in which an oscillator (4, 5, 6) is provided, with which one of the parts to be joined is set in oscillation and which is driven by oppositely acting electromagnets (2, 3), an output of a displacement sensor (11) that picks up the respective position of the oscillator (4, 5, 6) being connected to an input of a controller (12), which is connected on the output side to inputs of a power output stage (13) for the electromagnets (2, 3), **characterized in that** the controller (12) is formed such that it activates the power output stage (13) in such a way that, depending on the respective direction of movement of the oscillator (4, 5, 6), current is applied to an electromagnet (2, 3) assisting the movement, that, for braking, current is applied to an electromagnet (2, 3) inhibiting the respective movement and that, during the braking, the current is switched off when a predetermined oscillation amplitude is reached.

4. Arrangement according to Claim 3, **characterized in that** the power output stage (13) is formed by a first bridge arm comprising two series-connected semiconductor switches (T3, T6) with parallel-connected freewheeling diodes (D3, D6) and two further bridge arms each comprising a series connection of a semiconductor switch (T1, T2) and a diode (D4, D5), **in that** the coils of the electromagnets (2, 3) are connected between the connecting point of the semiconductor switches (T3, T6) of the first bridge arm on the one hand and in each case a connecting point of the further bridge arms on the other hand, **in that** the semiconductor switches (T3, T6) of the first bridge arm are activated with the oscillating frequency and the semiconductor switches (T1, T2) of the further bridge arms are activated under pulse-width modulation or tolerance-band control, possibly resulting in frequencies higher than the oscillating frequency, depending on the controlled condition.

5. Arrangement according to Claim 4, **characterized in that** the diodes (D4, D5) are formed by semiconductor switches (T4, T5) with parallel-connected freewheeling diodes (D4, D5).

6. Arrangement according to Claim 5, **characterized in that**, from working cycle to working cycle, the current through the electromagnets (2, 3) is changed over via the further bridge arms.

7. Arrangement according to one of Claims 3 to 6, **characterized in that** means for forming a trigger signal for switching the current through the respective electromagnets (2, 3) are formed by the trigger signal occurring a predeterminable fraction, preferably a quarter, of an oscillating period after a zero crossing of the oscillation.

8. Arrangement according to one of Claims 3 to 7, **characterized in that** the controller (12) has an integral component, which at the beginning is preset with a significant value.

9. Arrangement according to one of Claims 3 to 8, **characterized in that** the oscillator (4, 5, 6), including the resilient mounting (5) thereof, and the work holder (6), the displacement sensor (11), the controller (12), the power output stage (13) and the electromagnets (2, 3) form an oscillating circuit, the resonant frequency of which is substantially determined by the natural frequency of the oscillator (4, 5, 6), including the resilient mounting (5) thereof and the work holder (6).

## Revendications

1. Procédé de soudage par friction avec lequel l'une des pièces à assembler est mise en oscillation à l'aide d'un oscillateur électromagnétique (4, 5, 6) et un amorçage d'oscillation, commandé par un détecteur de course (11), est effectué par l'application alternée de deux électroaimants (2, 3) agissant en opposition, **caractérisé en ce que** l'oscillateur (4, 5, 6) est freiné électriquement après un amorçage régulé de l'oscillation et un temps d'oscillation pouvant être prédéfini, qu'en fonction du sens du mouvement correspondant de l'oscillateur (4, 5, 6), un électroaimant (2, 3) qui assiste le mouvement est alimenté électriquement lors de l'amorçage de l'oscillation et un électroaimant (2, 3) qui ralentit le mouvement correspondant est alimenté électriquement lors du freinage et que le courant est déconnecté pendant le freinage lorsqu'une amplitude d'oscillation prédéfinie est atteinte.

2. Procédé selon la revendication 1, **caractérisé en ce que** l'amorçage de l'oscillation et le freinage sont respectivement plus courts que 80 ms.

3. Arrangement de soudage par friction avec lequel il est prévu un oscillateur (4, 5, 6) avec lequel l'une des pièces à assembler est mise en oscillation et lequel est entraîné par des électroaimants (2, 3) agissant en opposition, une sortie d'un détecteur de course (11) qui enregistre la position correspondante de l'oscillateur (4, 5, 6) étant reliée avec une entrée d'un régulateur (12) dont la sortie est reliée aux entrées d'un étage final de puissance (13) pour les électroaimants (2, 3), **caractérisé en ce que** le régulateur (12) est configuré de telle sorte qu'il commande l'étage final de puissance (13) de sorte qu'en fonction du sens du mouvement correspondant de l'oscillateur (4, 5, 6), un électroaimant (2, 3) qui assiste le mouvement est alimenté électriquement, qu'un électroaimant (2, 3) qui ralentit le mouvement correspondant est alimenté électriquement pour le freinage et que le courant est déconnecté pendant le freinage lorsqu'une amplitude d'oscillation prédéfinie est atteinte.

4. Arrangement selon la revendication 3, **caractérisé en ce que** l'étage final de puissance (13) est formé par une première branche de pont constituée de deux commutateurs à semiconducteur (T3, T6) branchés en série en parallèle desquels sont branchées des diodes de roue libre (D3, D6) et par deux branches de pont supplémentaires constituées respectivement d'un circuit série incluant un commutateur à semiconducteur (T1, T2) et une diode (D4, D5), que les bobines des électroaimants (2, 3) sont branchées d'un côté entre le point de connexion des commutateurs à semiconducteur (T3, T6) de la première branche de pont et à chaque fois un point de connexion des autres branches de pont de l'autre côté, que les commutateurs à semiconducteur (T3, T6) de la première branche de pont sont commandés avec la fréquence d'oscillation et les commutateurs à semiconducteur (T1, T2) des autres branches du pont sont modulés en largeur d'impulsion ou régulés en bande de tolérance, des fréquences supérieures à la fréquence d'oscillation pouvant être obtenues en fonction de l'état de la régulation.

5. Arrangement selon la revendication 4, **caractérisé en ce que** les diodes (D4, D5) des commutateurs à semiconducteur (T4, T5) sont formées par des diodes de roue libre (D4, D5) branchées en parallèle.

6. Arrangement selon la revendication 5, **caractérisé en ce que** le courant à travers les électroaimants (2, 3) est permuté sur les branches de pont supplémentaires d'un cycle de travail à l'autre.

7. Arrangement selon l'une des revendications 3 à 6, **caractérisé en ce que** les moyens pour former un signal de déclenchement destiné à faire passer le courant à travers les électroaimants (2, 3) respectifs sont configurés de telle sorte que le signal de déclenchement se produit à une part pouvant être prédéfinie, de préférence un quart de la durée d'une oscillation après un passage par zéro de l'oscillation.

8. Arrangement selon l'une des revendications 3 à 7, **caractérisé en ce que** le régulateur (12) présente une part intégrale qui se voit dotée au début d'une valeur très élevée.

9. Arrangement selon l'une des revendications 3 à 8, **caractérisé en ce que** l'oscillateur (4, 5, 6) ainsi que son support antivibratoire (5) et l'attachement d'outil (6), le détecteur de course (11), le régulateur (12), l'étage final de puissance (13) et les électroaimants (2, 3) forment un circuit oscillant dont la fréquence de résonance est pour l'essentiel déterminée par la fréquence propre de l'oscillateur (4, 5, 6), y compris son support antivibratoire (5) et l'attachement d'outil (6).
